# EUROPEAN PATENT APPLICATION

(11) **EP 4 513 623 A2**
(43) Date of publication of application: **26.02.2025**
(21) Application number: 24196071.5
(22) Date of filing: 23.08.2024
(51) Int. Cl.: H01M 10/613, H01M 10/627, H01M 10/647, H01M 10/6551, H01M 10/6556, H01M 10/6567, H01M 50/209

(54) **ENERGY STORAGE CABINET AND BATTERY PACK THEREOF**

(30) Priority: 23.08.2023 US 202363534181 P
(71) Applicant: Delta Electronics, Inc., Taoyuan City 333 (TW)
(72) Inventor: CHEN, Chin-Ming, 333 Taoyuan City (TW); WU, Chih-Yu, 333 Taoyuan City (TW); PENG, Yen-Kai, 333 Taoyuan City (TW)
(74) Representative: Riccardi, Elisa

(57) **Abstract**

A battery pack includes a housing, a plurality of battery cells and a liquid filling device. The battery cells are disposed in the housing, and each of the battery cells includes two electrodes. The housing has a side opening. A lower edge of the side opening is positioned below the electrodes in a vertical direction. The liquid filling device is connected to the housing and is configured to fill a cooling liquid into the housing. The side opening of the housing is configured to allow excessive cooling liquid to be discharged out of the housing.

## Description

### BACKGROUND

### Technical Field

The present disclosure relates to an energy storage cabinet and a battery pack thereof.

### Description of Related Art

Lithium ion secondary battery is the most commonly used type of battery in power storage equipment nowadays. Lithium ion secondary batteries are dangerous and may catch fire when the temperature is too high. Hence, power storage equipment needs a mechanism to deal with the fire hazard of lithium ion secondary batteries.

### SUMMARY

In view of the foregoing, one of the objects of the present disclosure is to provide an energy storage cabinet with fire protection mechanism and a battery pack of the energy storage cabinet.

To achieve the objective stated above, in accordance with an embodiment of the present disclosure, a battery pack includes a housing, a plurality of battery cells and a liquid filling device. The housing has a first side opening. The battery cells are disposed in the housing and each of the battery cells has a main body and two electrodes. The two electrodes are disposed on a lid on an upper end of the main body. A lower edge of the first side opening of the housing is positioned below the two electrodes in a vertical direction. The liquid filling device is connected to the housing and is configured to fill a cooling liquid into the housing. The first side opening of the housing is configured to allow excessive cooling liquid to be discharged out of the housing.

In one or more embodiments of the present disclosure, a highest level of the cooling liquid in the housing is below the two electrodes when the cooling liquid is filled into the housing.

In one or more embodiments of the present disclosure, the battery pack further includes a control board disposed over the battery cells. The lower edge of the first side opening of the housing is positioned below the control board in the vertical direction.

In one or more embodiments of the present disclosure, the battery pack further includes a bus bar electrically connected to the two electrodes of two of the battery cells, respectively. The lower edge of the first side opening of the housing is positioned below the bus bar in the vertical direction.

In one or more embodiments of the present disclosure, the liquid filling device includes a liquid pipe and a valve. The liquid pipe is connected to a liquid tank. The valve is disposed on the liquid pipe and is configured to allow or block delivery of the cooling liquid to the housing by the liquid pipe based on a temperature of the battery pack.

In accordance with an embodiment of the present disclosure, an energy storage cabinet includes a frame, a liquid tank, and the battery pack described above disposed on the frame. The liquid tank is disposed on the frame and is positioned above the battery pack. The liquid tank is configured to store the cooling liquid. The liquid filling device is connected between the housing of the battery pack and the liquid tank and is configured to guide the cooling liquid in the liquid tank to flow into the housing of the battery pack.

In one or more embodiments of the present disclosure, the frame includes a support. The support is disposed on a side of the battery pack and is configured to support the battery pack. The support has an internal fluid passage. The first side opening of the housing of the battery pack is in fluid communication with the internal fluid passage of the support.

In one or more embodiments of the present disclosure, the housing of the battery pack includes a first duct structure surrounding the first side opening and projecting from an outer wall of the housing. The support further has a second side opening communicating with the internal fluid passage. The support includes a second duct structure surrounding the second side opening and projecting from an outer wall of the support. The second duct structure is coupled to the first duct structure. The first duct structure has a first sloping edge. The second duct structure has a second sloping edge. The first sloping edge and the second sloping edge have complementary shapes and abut against each other.

In one or more embodiments of the present disclosure, the energy storage cabinet further includes a control device configured to receive temperature information from a temperature sensor or a battery management system. The temperature information is indicative of a temperature of the battery pack. The control device is further configured to determine whether the battery pack is overheating based on the temperature information. If the battery pack is overheating, then the control device is configured to instruct the liquid filling device to fill the cooling liquid into the housing of the battery pack.

In one or more embodiments of the present disclosure, the control device is configured to determine, based on the temperature information, whether the temperature of the battery pack exceeds a first threshold value or whether a temperature change rate of the battery pack exceeds a second threshold value. If the temperature of the battery pack exceeds the first threshold value or the temperature change rate of the battery pack exceeds the second threshold value, then the control device is configured to instruct the liquid filling device to fill the cooling liquid into the housing of the battery pack.

In one or more embodiments of the present disclosure, the liquid tank covers an upper surface of the battery pack.

In sum, the energy storage cabinet of the present disclosure includes a liquid tank configured to store a cooling liquid. At least one of the battery packs of the energy storage cabinet is provided with a liquid filling device. The liquid filling device is connected to the liquid tank and is configured to fill the cooling liquid into the housing of the battery pack to cope with the situation where some or all of the battery cells of the battery pack fail and the temperature goes out of control or even causes fire. The housing has at least one side opening which can allow excessive cooling liquid to be discharged out of the housing. In the vertical direction, a lower edge of the side opening of the housing is at a position below the electrodes of the battery cells. Thus, the cooling liquid is prevented from contacting the electrodes of the battery cells to avoid short-circuiting of the battery cells.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates a schematic view of an energy storage cabinet in accordance with an embodiment of the present disclosure;
Fig. 2 illustrates a schematic view of one of the battery packs of the energy storage cabinet shown in Fig. 1;
Fig. 3 illustrates a sectional view of one of the battery packs of the energy storage cabinet shown in Fig. 1;
Fig. 4 illustrates a partially enlarged view of the energy storage cabinet shown in Fig. 1; and
Fig. 5 illustrates a partially enlarged view of the slots of the energy storage cabinet shown in Fig. 1.

### DETAILED DESCRIPTION

For the completeness of the description of the present disclosure, reference is made to the accompanying drawings and the various embodiments described below. Various features in the drawings are not drawn to scale and are provided for illustration purposes only. To provide full understanding of the present disclosure, various practical details will be explained in the following descriptions. However, a person with an ordinary skill in relevant art should realize that the present disclosure can be implemented without one or more of the practical details. Therefore, the present disclosure is not to be limited by these details.

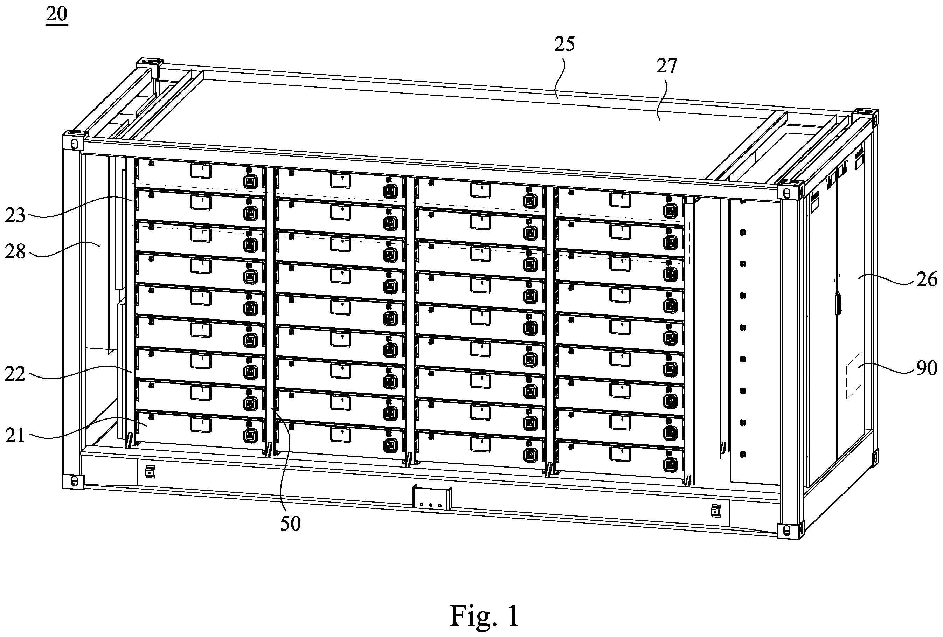

Reference is made to Fig. 1. Fig. 1 illustrates a schematic view of an energy storage cabinet 20 in accordance with an embodiment of the present disclosure. The energy storage cabinet 20 includes a frame 22 and a plurality of battery packs 21 disposed on the frame 22. The frame 22 is configured to support the battery packs 21. The frame 22 has one or more slots, and each of the slots is configured to accommodate one of the battery packs 21. The battery packs 21 are detachably disposed in the slots of the frame 22. In other words, the battery packs 21 can be inserted in the slots, and can be pulled out of the slots as needed (e.g., for the purpose of repair or maintenance). The battery packs 21 may be engaged with rail structures of the frame 22 (not depicted), such that the battery packs 21 can be slid into or out of the slots. In some embodiments, the frame 22 includes a plurality of supports 50 extending substantially along a vertical direction. At least one of the supports 50 is disposed between the battery packs 21 and separates adjacent battery packs 21.

As shown in Fig. 1, the battery packs 21 are stacked along the vertical direction. The battery packs 21 can be divided into multiple floor assemblies 23. Battery packs 21 with the same elevation belong to the same floor assembly 23. In the illustrated embodiment, the energy storage cabinet 20 includes nine floor assemblies 23, and one of which is identified by a dashed box. The battery packs 21 in the same floor assembly 23 are electrically connected in series, such that the voltages of the battery packs 21 in the same floor assembly 23 are summed up to produce a greater voltage. Each of the floor assemblies 23 has a common anode and a common cathode.

As shown in Fig. 1, the energy storage cabinet 20 further includes a junction device 26. The junction device 26 is disposed on the frame 22 and is positioned on one side of the energy storage cabinet 20. The junction device 26 is connected to the common anode and the common cathode (not depicted) of each of the floor assemblies 23. The junction device 26 may include a DC junction unit, an AC auxiliary unit, and one or more control units (or one or more switch units).

As shown in Fig. 1, the energy storage cabinet 20 further includes a control device 90 (only drawn schematically, does not show its actual structure) configured to control the operation of the energy storage cabinet 20. In some embodiments, the junction device 26 and the control device 90 are enclosed by a casing.

As shown in Fig. 1, the energy storage cabinet 20 further includes a cooling device 28. The cooling device 28 is disposed on the frame 22 and is positioned on another side of the energy storage cabinet 20. The cooling device 28 is configured to output a cool air to facilitate cooling of the battery packs 21. The cooling device 28 is, for example, an air conditioner. In some embodiments, the junction device 26 and the cooling device 28 are disposed on two opposite sides of the battery packs 21.

As shown in Fig. 1, the energy storage cabinet 20 further includes a liquid tank 25. The liquid tank 25 is disposed on the frame 22 and is positioned above the battery packs 21. The liquid tank 25 is configured to store a cooling liquid 27 (e.g., pure water). The cooling liquid 27 stored in the liquid tank 25 can be provide fire protection function for the energy storage cabinet 20. When it is detected that the temperature of at least one of the battery packs 21 is too high or is rising too fast, the cooling liquid 27 can be filled into the overheating battery pack(s) 21 to cope with the situation where some or all of the battery cells of the battery pack 21 fail and the temperature goes out of control or even causes fire. The amount of the cooling liquid 27 stored by the liquid tank 25 is sufficient to completely fill up at least one of the battery packs 21 (i.e., allowing the cooling liquid 27 filled in one battery pack 21 to reach its highest level in the battery pack 21).

As shown in Fig. 1, the liquid tank 25 may be disposed on an upper side of the frame 22. In some embodiments, the liquid tank 25 covers an upper surface of part or all of the battery packs 21. By this arrangement, when the liquid tank 25 is placed in an outdoor environment, the liquid tank 25 and the cooling liquid 27 in the liquid tank 25 can block the sunlight to protect the battery packs 21 from being heated by the sunlight.

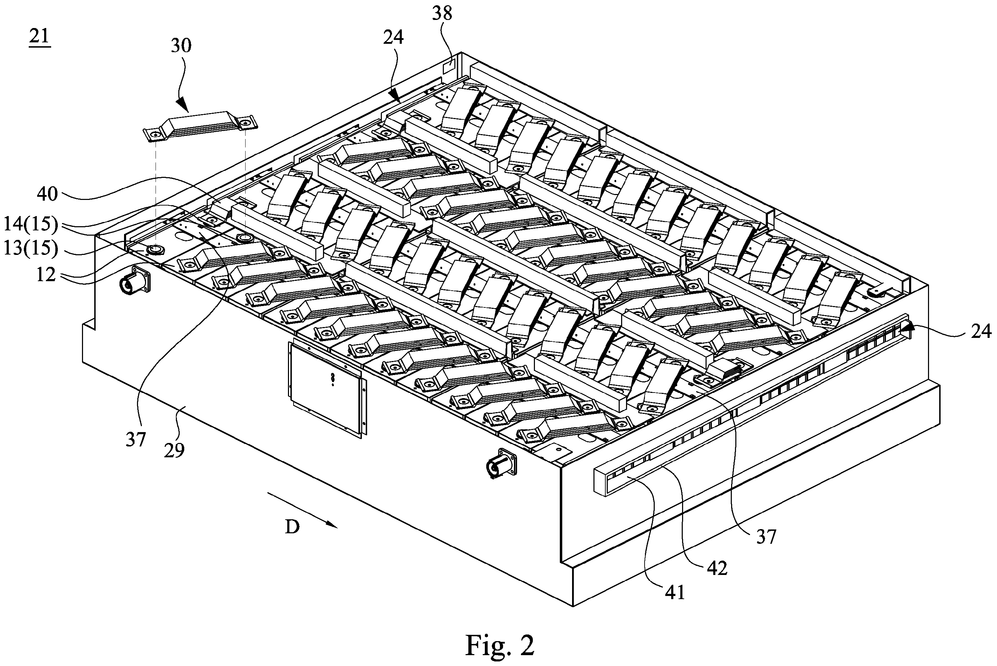

Reference is made to Fig. 2. Fig. 2 illustrates a schematic view of one of the battery packs 21 of the energy storage cabinet 20 shown in Fig. 1. In Fig. 2, a lid of the battery pack 21 is removed to reveal the interior of the battery pack 21. The battery pack 21 includes a housing 29 and a plurality of battery cells 12 disposed in the housing 29. The battery cells 12 are, for example, lithium ion secondary batteries. The battery cells 12 may include prismatic cells shown in Fig. 2. The battery cells 12 are arranged in at least one row along a direction D. In the illustrated embodiment, the battery pack 21 includes forty-eight battery cells 12 arranged in four rows. Each of the rows has twelve battery cells 12. The battery pack 21 further includes a lid (not depicted) for covering a top opening of the housing 29.

As shown in Fig. 2, each of the battery cells 12 includes two electrodes 15 arranged side by side, one of which is a positive electrode 13 and the other is a negative electrode 14. The battery pack 21 further includes a plurality of bus bars 30. The bus bars 30 are disposed in the housing 29 and are configured to connect the battery cells 12 in series. Specifically, each of the bus bars 30 is electrically connected to the positive electrode 13 and the negative electrode 14 of two immediately adjacent battery cells 12 in the same row. In some embodiments, the battery pack 21 further includes at least one interconnection component 40. The interconnection component 40 is disposed in the housing 29 and is electrically connected to the electrodes 15 of two battery cells 12 on adjacent rows.

In the illustrated embodiment, each of the battery cells 12 has a main body, and the electrodes 15 are disposed on a lid on an upper end of the main body. The bus bars 30 and the interconnection component 40 are disposed over the battery cells 12 and are in contact with the electrodes 15 of the battery cells 12. The bus bars 30 and the interconnection component 40 may include electrically conductive materials, such as copper or copper alloy. The bus bars 30 and the interconnection component 40 can be affixed to the electrodes 15 of the battery cells 12 by means of laser welding, screwing, or other suitable techniques. In some embodiments, the interconnection component 40 is shorter in length than the bus bars 30.

As shown in Fig. 2, the battery pack 21 further includes a plurality of control boards 37 disposed over the battery cells 12. For example, the control boards 37 may be disposed on the upper surfaces of the battery cells 12 (the upper surfaces of the battery cells 12 are where the electrodes 15 reside). Each of the control boards 37 can be paired up with one of the battery cells 12. Each of the control boards 37 can include a battery management system (BMS) IC. The BMS can perform various management tasks for a respective battery cell 12. The management tasks may include at least one of the following: measuring voltage and current of the battery cell 12, monitoring parameters of the battery cell 12 such as temperature, state-of-charge (SoC) and state-of-health (SoH), diagnosing and/or reporting abnormality of the battery cell 12, and controlling charging and discharging of the battery cell 12. In some embodiments, the control boards 37 are communicably connected to the control device 90 mentioned above, such that the control boards 37 can exchange information with the control device 90. For example, the control boards 37 can report the states of the battery cells 12 to the control device 90.

As shown in Fig. 2, the battery pack 21 may further include at least one temperature sensor 38 (only drawn schematically, does not show its actual structure). The temperature sensor 38 is disposed in the housing 29 and is configured to provide a sensing signal indicative of a temperature at a specific location within the battery pack 21. The temperature sensor 38 can be provided at any suitable location inside the housing 29. For example, the temperature sensor 38 can be positioned next to the battery cells 12, between the battery cells 12, or on the outer surfaces of the battery cells 12.

In some embodiments, each of the battery cells 12 is provided with at least one temperature sensor 38. Further, the battery pack 21 may include a plurality of temperature sensors 38 at multiple different locations to measure temperatures at multiple different locations within the battery pack 21.

The temperature sensor 38 can be communicably connected to the control board 37 and can provide the sensing signal to the control board 37. In some embodiments, the temperature sensor 38 can be communicably connected to the control device 90 mentioned above and can provide the sensing signal to the control device 90.

As shown in Fig. 2, the housing 29 of the battery pack 21 has at least one side opening 24. The at least one side opening 24 is provided on at least one sidewall of the housing 29. The side opening 24 is configured to allow excessive cooling liquid filled into the internal space of the housing 29 to be discharged out of the housing 29. The portion of the housing 29 below the side opening 24 is watertight. In other words, the portion of the housing 29 below the side opening 24 does not have any opening through which liquid can escape. Consequently, the excessive cooling liquid would only leave the housing 29 through the side opening 24.

As shown in Fig. 2, the housing 29 can have two side openings 24 provided on two opposite sides of the housing 29. As a result, aside from acting as discharge port for excessive cooling liquid, the two side openings 24 can also serve as an airflow channel that allows airflow (e.g., the cool air produced by the cooling device 28 shown in Fig. 1) to pass through to facilitate cooling of the battery cells 12.

As shown in Fig. 2, the housing 29 of the battery pack 21 may include at least one first duct structure 41. The first duct structure 41 surrounds a respective side opening 24 of the housing 29 and projects from an outer wall of the housing 29. The first duct structure 41 can be coupled to one of the supports 50 of the frame 22 mentioned above. In some embodiments, the first duct structure 41 has a first sloping edge 42. The first duct structure 41 can be coupled to a fluid passage external to the housing 29.

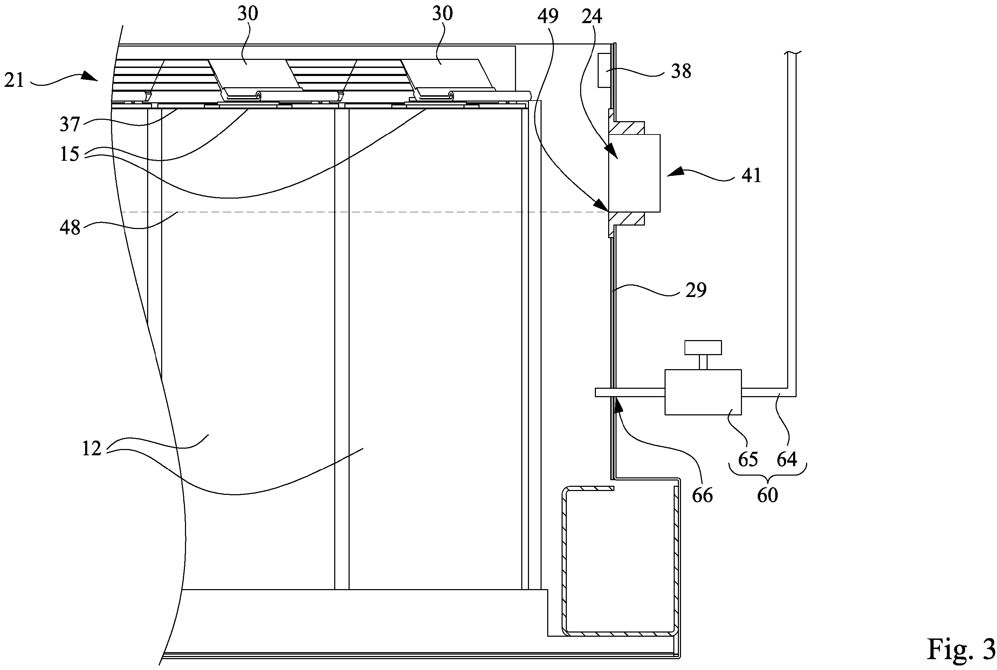

Reference is made to Fig. 3. Fig. 3 illustrates a sectional view of one of the battery packs 21 of the energy storage cabinet 20 shown in Fig. 1. The battery pack 21 further includes a liquid filling device 60 connected to the housing 29. A liquid filling port 66 is formed at a position where the housing 29 and the liquid filling device 60 are connected. The liquid filling device 60 is configured to acquire the cooling liquid 27 from the liquid tank 25 mentioned above and is configured to fill the cooling liquid 27 into the housing 29.

As shown in Fig. 3, a lower edge 49 of the side opening 24 of the housing 29 is positioned below the electrodes 15 of the battery cells 12 in a vertical direction. A highest level 48 of the cooling liquid 27 filled into the housing 29 through the liquid filling port 66 is below the electrodes 15 of the battery cells 12. As a result, the cooling liquid 27 is prevented from contacting the electrodes 15 of the battery cells 12 to avoid short-circuiting of the battery cells 12. Optionally, the liquid filling port 66 can be positioned below the lower edge 49 of the side opening 24 in the vertical direction.

As shown in Fig. 3, the lower edge 49 of the side opening 24 of the housing 29 is positioned below the bus bars 30 in the vertical direction. The highest level 48 of the cooling liquid 27 filled into the housing 29 is below the bus bars 30. The lower edge 49 of the side opening 24 of the housing 29 is positioned below the control boards 37 in the vertical direction. The highest level 48 of the cooling liquid 27 filled into the housing 29 is below the control boards 37. By this arrangement, short-circuiting of the battery cells 12 or damage of the control boards 37 can be prevented.

As shown in Fig. 3, the liquid filling device 60 includes a liquid pipe 64. One end of the liquid pipe 64 is connected the housing 29 of the battery pack 21 via the liquid filling port 66, and the other end of the liquid pipe 64 can be connected to the liquid tank 25 mentioned above to acquire the cooling liquid.

As shown in Fig. 3, the liquid filling device 60 further includes a valve 65 disposed on the liquid pipe 64. The valve 65 can switch between an open state and a close state. When the valve 65 is in the open state, the valve 65 allows the liquid pipe 64 to deliver the cooling liquid to the housing 29. When the valve 65 is in the close state, the valve 65 blocks the liquid pipe 64 such that the liquid pipe 64 cannot deliver the cooling liquid to the housing 29.

The valve 65 may also control the flow rate of the cooling liquid. For example, the valve 65 can be a solenoid valve. The control device 90 mentioned above can control opening and closing of the valve 65, and can also control the degree the valve 65 is opened. The valve 65 is configured to allow or block delivery of the cooling liquid to the housing 29 by the liquid pipe 64 based on information about a temperature of the battery pack 21.

In some embodiments, the aforementioned control device 90 of the energy storage cabinet is configured to receive temperature information from the temperature sensor 38 or the battery management system on the control board 37. The temperature information is indicative of a temperature at one or more locations within the battery pack 21. The control device is further configured to determine whether the battery pack 21 is overheating based on the temperature information. If the battery pack 21 is overheating, then the control device is configured to instruct the liquid filling device 60 to fill the cooling liquid into the housing 29 of the battery pack 21. The control device may be communicably connected to the valve 65. If the battery pack 21 is overheating, then the control device can instruct the valve 65 to open by sending a control signal to the valve 65.

The aforementioned control device 90 of the energy storage cabinet 20 is configured to determine, based on the temperature information, whether the temperature of the battery pack 21 exceeds a first threshold value or whether a temperature change rate of the battery pack 21 exceeds a second threshold value. If the temperature of the battery pack 21 exceeds the first threshold value or the temperature change rate of the battery pack 21 exceeds the second threshold value, then the control device is configured to instruct the liquid filling device 60 to fill the cooling liquid into the housing 29 of the battery pack 21.

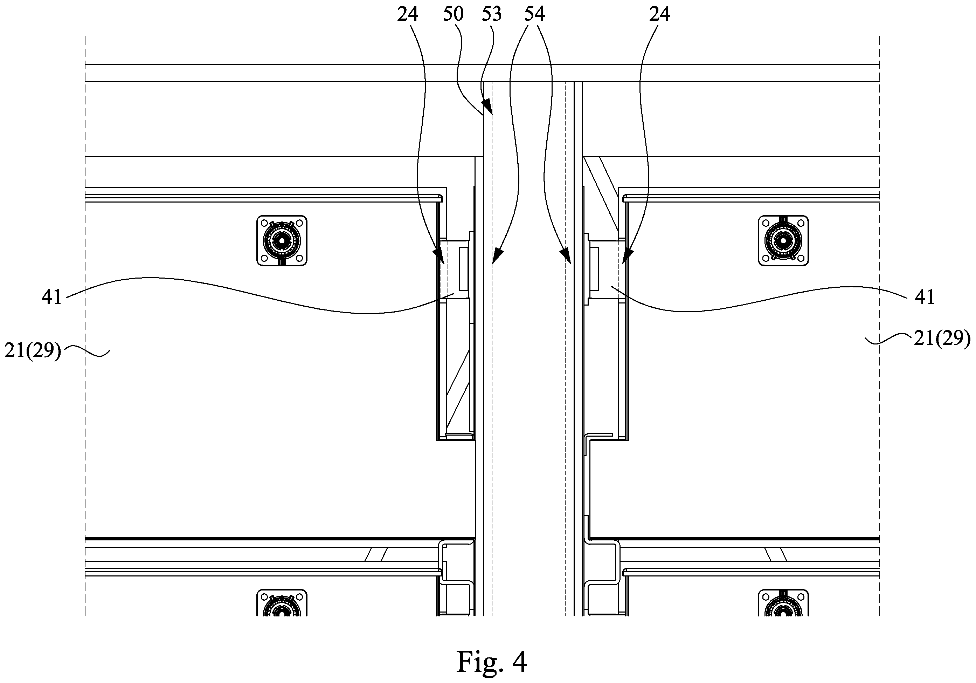

Reference is made to Fig. 4. Fig. 4 illustrates a partially enlarged view of the energy storage cabinet 20 shown in Fig. 1. In some embodiments, the support 50 has an internal fluid passage 53 (shown in dashed lines). The side opening 24 of the housing 29 of the battery pack 21 (shown in dashed lines) is in fluid communication with the internal fluid passage 53 of the support 50. By this arrangement, excessive cooling liquid can be discharged into the internal fluid passage 53 of the support 50. The excessive cooling liquid can then flow in the internal fluid passage 53 to the bottom of the energy storage cabinet, and then get discharged out of the energy storage cabinet. In some embodiments, the support 50 further has at least one side opening 54 (shown in dashed lines) in fluid communication with the internal fluid passage 53. The battery pack 21 may be coupled to the side opening 54 of the support 50 via the first duct structure 41.

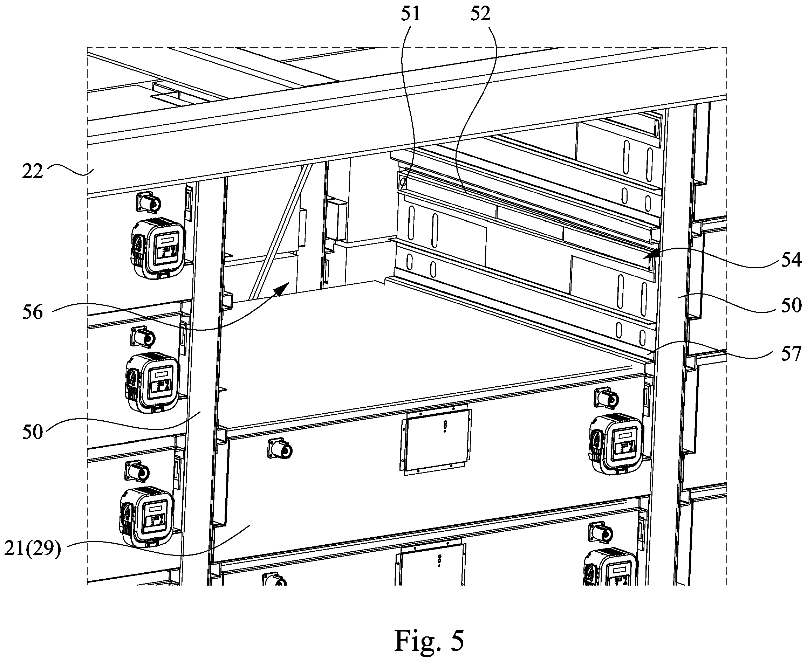

Reference is made to Fig. 5. Fig. 5 illustrates a partially enlarged view of the slots 56 of the energy storage cabinet 20 shown in Fig. 1. Two adjacent supports 50 of the frame 22 define multiple slots 56. The battery packs 21 are detachably disposed in the slots 56. Fig. 5 shows some of the battery packs 21 being ejected from the slots 56. At least one of the supports 50 can include at least one guiding rail 57 disposed on a lateral surface of the supports 50. The guiding rail 57 is configured to slidably engage the housing 29 of the battery pack 21.

As shown in Fig. 5, at least one of the supports 50 can include at least one second duct structure 51. Each second duct structure 51 surrounds a respective side opening 54 of the supports 50 and projects from an outer wall of the supports 50. The second duct structure 51 is coupled to the first duct structure 41 mentioned above, such that the side opening 24 of the housing 29 of the battery pack 21 communicates with a respective side opening 54 of the supports 50. In some embodiments, the second duct structure 51 has a second sloping edge 52. The first sloping edge 42 of the first duct structure 41 mentioned above and the second sloping edge 52 of the second duct structure 51 have complementary shapes and abut against each other, such that the gap between the first duct structure 41 and the second duct structure 51 is minimized. With the first sloping edge 42 and the second sloping edge 52, the battery packs 21 can be smoothly inserted into or ejected from slots 56.

In sum, the energy storage cabinet of the present disclosure includes a liquid tank configured to store a cooling liquid. At least one of the battery packs of the energy storage cabinet is provided with a liquid filling device. The liquid filling device is connected to the liquid tank and is configured to fill the cooling liquid into the housing of the battery pack to cope with the situation where some or all of the battery cells of the battery pack fail and the temperature goes out of control or even causes fire. The housing has at least one side opening which can allow excessive cooling liquid to be discharged out of the housing. In the vertical direction, a lower edge of the side opening of the housing is at a position below the electrodes of the battery cells. Thus, the cooling liquid is prevented from contacting the electrodes of the battery cells to avoid short-circuiting of the battery cells.

## Claims

1. A battery pack (21), **characterized by** comprising:
a housing (29) having a side opening (24);
a plurality of battery cells (12) disposed in the housing and each having a main body and two electrodes (15), the two electrodes being disposed on a lid on an upper end of the main body, wherein a lower edge (49) of the side opening (24) of the housing (29) is positioned below the two electrodes (15) in a vertical direction; and
a liquid filling device (60) connected to the housing (29) and configured to fill a cooling liquid into the housing (29), wherein the side opening (24) of the housing (29) is configured to allow excessive cooling liquid to be discharged out of the housing (29).

2. The battery pack of claim 1, **characterized in that** a highest level (48) of the cooling liquid in the housing (29) is below the two electrodes (15) when the cooling liquid is filled into the housing (29).

3. The battery pack of claim 1 or 2, **characterized by** further comprising a control board (37) disposed over the battery cells (12), wherein the lower edge (49) of the side opening (24) of the housing (29) is positioned below the control board (37) in the vertical direction.

4. The battery pack of any preceding claim, **characterized by** further comprising a bus bar (30) electrically connected to the two electrodes (15) of two of the battery cells (12), wherein the lower edge (49) of the side opening (24) of the housing (29) is positioned below the bus bar (30) in the vertical direction.

5. The battery pack of any preceding claim, **characterized in that** the liquid filling device (60) comprises a liquid pipe (64) and a valve (65), the liquid pipe (64) is connected to a liquid tank (25), the valve (65) is disposed on the liquid pipe (64) and is configured to allow or block delivery of the cooling liquid (27) to the housing by the liquid pipe (64) based on a temperature of the battery pack (21).

6. The battery pack of any preceding claim, **characterized in that** the housing (29) comprises a duct structure (41), the duct structure (41) surrounds the side opening (24) and projects from an outer wall of the housing (29).

7. An energy storage cabinet (20), **characterized by** comprising:
a frame (22);
a battery pack (21) disposed on the frame (22) and comprising a housing (29), a plurality of battery cells (12), and a liquid filling device (60), wherein the housing (29) has a first side opening (24), the battery cells (12) are disposed in the housing (29) and each have a main body and two electrodes (15), the two electrodes (15) are disposed on a lid on an upper end of the main body, wherein a lower edge (49) of the first side opening (24) of the housing (29) is positioned below the two electrodes (15) in a vertical direction, the liquid filling device (60) is connected to the housing (29) and is configured to fill a cooling liquid (27) into the housing (29), wherein the first side opening (24) of the housing (29) is configured to allow excessive cooling liquid (27) to be discharged out of the housing (29); and
a liquid tank (25) disposed on the frame (22) and positioned above the battery pack (21), the liquid tank (25) being configured to store the cooling liquid (27), wherein the liquid filling device (60) is connected between the housing (29) of the battery pack (21) and the liquid tank (25) and is configured to guide the cooling liquid (27) in the liquid tank (25) to flow into the housing (29) of the battery pack (21).

8. The energy storage cabinet of claim 7, **characterized in that** the frame (22) comprises a support (50), the support (50) is disposed on a side of the battery pack (21) and is configured to support the battery pack (21), wherein the support (50) has an internal fluid passage (53), the first side opening (24) of the housing (29) of the battery pack (21) is in fluid communication with the internal fluid passage (53) of the support (50).

9. The energy storage cabinet of claim 8, **characterized in that** the housing (29) of the battery pack (21) comprises a first duct structure (41), the first duct structure (41) surrounds the first side opening (24) and projects from an outer wall of the housing (29), wherein the support (50) further has a second side opening (54) communicating with the internal fluid passage (53), the support (50) comprises a second duct structure (51), the second duct structure (51) surrounds the second side opening (54) and projects from an outer wall of the support (50), wherein the second duct structure (51) is coupled to the first duct structure (41), wherein the first duct structure (41) has a first sloping edge (42), the second duct structure (51) has a second sloping edge (52), the first sloping edge (42) and the second sloping edge (52) have complementary shapes and abut against each other.

10. The energy storage cabinet of any of claims 7-9, **characterized by** further comprising a control device (90), wherein the control device (90) is configured to receive temperature information from a temperature sensor (38) or a battery management system, the temperature information is indicative of a temperature of the battery pack (21), the control device (90) is further configured to determine whether the battery pack (21) is overheating based on the temperature information, if the battery pack (21) is overheating, then the control device (90) is configured to instruct the liquid filling device (60) to fill the cooling liquid (27) into the housing (29) of the battery pack (21).

11. The energy storage cabinet of claim 10, **characterized in that** the control device (90) is configured to determine, based on the temperature information, whether the temperature of the battery pack (21) exceeds a first threshold value or whether a temperature change rate of the battery pack (21) exceeds a second threshold value, if the temperature of the battery pack (21) exceeds the first threshold value or the temperature change rate of the battery pack (21) exceeds the second threshold value, then the control device (90) is configured to instruct the liquid filling device (60) to fill the cooling liquid (29) into the housing (29) of the battery pack (21).

12. The energy storage cabinet of any of claims 7-11, **characterized in that** the liquid tank (25) covers an upper surface of the battery pack (21).

13. The energy storage cabinet of any of claim 7-12, **characterized in that** a highest level (48) of the cooling liquid in the housing (29) is below the two electrodes (15) when the cooling liquid is filled into the housing (29).

14. The energy storage cabinet of any of claims 7-13, **characterized in that** the battery pack (21) further comprises a control board (37) disposed over the battery cells (12), the lower edge (49) of the first side opening (24) of the housing (29) is positioned below the control board (37) in the vertical direction.

15. The energy storage cabinet of any of claims 7-14, **characterized in that** the battery pack (21) further comprises a bus bar (30) electrically connected to the two electrodes (15) of two of the battery cells (12), the lower edge (49) of the first side opening (24) of the housing (29) is positioned below the bus bar (30) in the vertical direction.
